# EUROPÄISCHE PATENTANMELDUNG

(11) **EP 2 837 645 A1**
(43) Veröffentlichungstag der Anmeldung: **18.02.2015**
(21) Anmeldenummer: 13180126.8
(22) Anmeldetag: 12.08.2013
(51) Int. Cl.: C08G 59/50

(54) **Verwendung von 2,5-bisaminomethylfuran als härter für epoxidharze**

(71) Anmelder: BASF SE, 67056 Ludwigshafen (DE)
(72) Erfinder: Panchenko, Alexander, 67071 Ludwigshafen (DE); Charrak, Monika, 67063 Ludwigshafen (DE); Dahmen, Kirsten, 67098 Bad Dürkheim (DE); Brinks, Marion, 68165 Mannheim (DE); Schelwies, Mathias, 69115 Heidelberg (DE); Blank, Benoit, 68535 Edingen-Neckarhausen (DE); Piepenbrink, Markus, 69126 Heidelberg (DE); Backes, Rene, 68623 Lampertheim (DE)

(57) **Zusammenfassung**

Die vorliegende Erfindung betrifft die Verwendung von 2,5-Bisaminomethylfuran als Härter für Harzkomponenten aus Epoxidharz und Reaktivverdünner, sowie eine entsprechende härtbare Zusammensetzung, deren Härtung und das daraus erhältliche gehärtete Epoxidharz. Die vorliegende Erfindung betrifft weiter die Verwendung von 2,5-Bisaminomethylfuran als Härter für die Herstellung von Epoxidharz-basierten Beschichtungen, insbesondere von frühwasserbeständigen Bodenbeschichtungen.

## Beschreibung

Die vorliegende Erfindung betrifft die Verwendung von 2,5-Bisaminomethylfuran (2,5-BAMF) als Härter für Harzkomponenten aus Epoxidharz und Reaktivverdünner, sowie eine härtbare Zusammensetzung, die ein oder mehrere Epoxidharze, ein oder mehrere Reaktivverdünner und 2,5-BAMF umfasst. Die Erfindung betrifft weiter die Härtung der härtbaren Zusammensetzung sowie das durch Härtung der härtbaren Zusammensetzung erhaltene gehärtete Epoxidharz. Die Erfindung betrifft auch die Verwendung von 2,5-BAMF als Härter für die Herstellung von Epoxidharz-basierten frühwasserbeständigen Beschichtungen, insbesondere von frühwasserbeständigen Bodenbeschichtungen.

Epoxidharze sind allgemein bekannt und werden aufgrund ihrer Zähigkeit, Flexibilität, Haftung und chemischen Beständigkeit als Materialien zur Oberflächenbeschichtung, als Klebstoffe und zum Formen und Laminieren verwendet sowie zur Herstellung von kohlenstofffaserverstärkten oder glasfaserverstärkten Verbundmaterialen.

Epoxidmaterialien gehören zu den Polyethern und können zum Beispiel durch Kondensation von Epichlorhydrin mit einem Diol, bspw. einem aromatischen Diol wie Bisphenol A hergestellt werden. Diese Epoxidharze werden anschließend durch Reaktion mit einem Härter, typischerweise einem Polyamin, gehärtet.

Ausgehend von Epoxidverbindungen mit mindestens zwei Epoxidgruppen kann beispielsweise mit einer Aminoverbindung mit zwei Aminogruppen eine Härtung durch eine Polyadditionsreaktion (Kettenverlängerung) erfolgen. Aminoverbindungen mit hoher Reaktivität werden im Allgemeinen erst kurz vor der gewünschten Härtung zugesetzt. Bei solchen Systemen handelt es sich daher um sogenannte zweikomponentige (2K) -Systeme.

Grundsätzlich werden aminische Härter nach ihrer chemischen Struktur in aliphatische, cycloaliphatische oder aromatische Typen eingeteilt. Zusätzlich ist eine Klassifizierung anhand des Substitutionsgrads der Aminogruppe möglich, die entweder primär, sekundär oder auch tertiär sein kann. Für die tertiären Amine wird allerdings ein katalytischer Härtungsmechanismus von Epoxidharzen postuliert, wohingegen für die sekundären und primären Amine jeweils stöchiometrische Härtungsreaktionen zum Aufbau des Polymernetzwerks zugrunde gelegt werden.

Im Allgemeinen ist gezeigt worden, dass innerhalb der primären Amin-Härter die aliphatischen Amine die höchste Reaktivität in der Epoxidhärtung zeigen. Etwas langsamer reagieren üblicherweise die cycloaliphatischen Amine, wohingegen die aromatischen Amine (Amine, bei denen die Aminogruppen direkt an einem C-Atom des aromatischen Rings gebunden sind) mit Abstand die geringste Reaktivität aufzeigen.

Diese bekannten Reaktivitätsunterschiede werden bei der Aushärtung von Epoxidharzen genutzt, um die Verarbeitungszeit und die mechanischen Eigenschaften der ausgehärteten Epoxidharze bedarfsgerecht einstellen zu können.

Für viele Anwendungen wie bspw. Klebstoffe, RTM-Anwendungen (*resin transfer molding*Anwendungen) oder Beschichtungen, insbesondere Bodenbeschichtungen, werden reaktive Härter benötigt, die bereits bei niedrigen Temperaturen härten bzw. kurze Aushärtungszeiten aufweisen. Typischerweise werden für solche Anwendungen als schnell härtende Härter meta-Xylylendiamin (MXDA), Triethylentetramin (TETA) oder Polyetheramine (bspw. Polyetheramin D-230 (difunktionelles, primäres Polyetheramin auf der Basis von Polypropylenglykol mit einer mittleren Molmasse von 230) oder Polyetheramin D-400 (difunktionelles, primäres Polyetheramin auf der Basis von Polypropylenglykol mit einer mittleren Molmasse von 400) eingesetzt. Die Härter Polyetheramin D-230 und Polyetheramin D-400 sind insbesondere bei der Herstellung von Beschichtungen, vor allem Bodenbeschichtungen (*flooring*) vorteilhaft, da sie eine gute Frühwasserbeständigkeit (aufgrund einer erhöhten Hydrophobierung) bewirken. Allerdings ist die Aushärtung bei diesen Polyetheraminen deutlich langsamer als bei TETA oder MXDA.

Die für die oben genannten Anwendungen üblicherweise eingesetzten Epoxidharze haben eine hohe Viskosität. Das ist nachteilig sowohl für die gleichmäßige Vermischung des Harzes mit der Härterkomponente sowie für die Handhabung der so erhaltenen härtbaren Zusammensetzung (Auftragen einer Beschichtung oder Befüllen einer Form). Daher ist es häufig erforderlich, dem Epoxidharz einen Reaktivverdünner zuzusetzen. Reaktivverdünner sind Verbindungen, die die Viskosität des Epoxidharzes sowie die Anfangsviskosität der härtbaren Zusammensetzung aus Harzkomponente und Härterkomponente herabsetzen und im Verlauf der Härtung der härtbaren Zusammensetzung mit dem sich ausbildenden Netzwerk aus Epoxidharz und Härter eine chemische Bindung eingehen. Allerdings bewirkt der Einsatz von Reaktivverdünnern nachteiliger Weise in der Regel auch eine verringerte Glasübergangstemperatur für das gehärtete Epoxidharz. Auch ist die Herabsetzung der Anfangsviskosität der härtbaren Zusammensetzung durch den Reaktivverdünner in hohem Maße abhängig von dem eingesetzten Härter.

In GB911221A wird unter anderem der Einsatz von 2,5-Bisaminomethylfuran als Härter für Epoxidharz erwähnt, ohne aber die Kombination mit Reaktivverdünnern oder die Verwendung für Beschichtungen nahezulegen.

Wünschenswert wäre ein aminischer Härter für Mischungen aus Epoxidharz und Reaktivverdünner (Harzkomponente), der gleichzeitig die Herstellung einer härtbaren Zusammensetzung mit einer vergleichsweise geringen Anfangsviskosität ermöglichen und eine vergleichsweise schnelle Aushärtung bewirkt. Darüber hinaus sollte das so erhaltene gehärtete Epoxidharz eine gute Frühwasserbeständigkeit aufweisen.

Als der Erfindung zugrunde liegende Aufgabe kann daher erachtet werden die Bereitstellung eines solchen aminischen Härters für Mischungen aus Epoxidharz und Reaktivverdünner und für die Verwendung zur Herstellung von Epoxidharz-basierten frühwasserbeständigen Beschichtungen, insbesondere frühwasserbeständigen Bodenbeschichtungen.

Entsprechend betrifft die vorliegende Erfindung die Verwendung von 2,5-Bisaminomethylfuran (2,5-BAMF) als Härter für Mischungen aus Epoxidharz und Reaktivverdünner (Harzkomponente), sowie eine härtbare Zusammensetzung, die dadurch gekennzeichnet ist, dass sie eine Harzkomponente und eine Härterkomponente umfasst, wobei die Harzkomponente ein oder mehrere Epoxidharze und ein oder mehrere Reaktivverdünner umfasst und die Härterkomponente 2,5-BAMF umfasst.

Reaktivverdünner im Sinne der Erfindung sind Verbindungen, die die Anfangsviskosität der härtbaren Zusammensetzung herabsetzen und im Verlauf der Härtung der härtbaren Zusammensetzung mit dem sich ausbildenden Netzwerk aus Epoxidharz und Härter eine chemische Bindung eingehen. Bevorzugte Reaktivverdünner im Sinne dieser Erfindung sind niedermolekulare organische, vorzugsweise aliphatische Verbindungen mit ein oder mehreren Epoxidgruppen, sowie cyclische Carbonate, insbesondere cyclische Carbonate mit 3 bis 10 C-Atomen, beispielsweise Ethylencarbonat, Propylencarbonat, Butylencarbonat oder Vinylencarbonat, sein.

Erfindungsgemäße Reaktivverdünner sind vorzugsweise ausgewählt aus der Gruppe bestehend aus Ethylencarbonat, Vinylencarbonat, Propylencarbonat, 1,4-Butandiolbisglycidylether, 1,6-Hexandiolbisglycidylether (HDDE), Glycidylneodecanoat, Glycidylversatat, 2-Ethylhexylglycidylether, Neopentylglykoldiglycidylether, p-tert-Butylglycidether, Butylglycidether, C₈-C₁₀- Alkylglycidylether, C₁₂-C₁₄- Alkylglycidylether, Nonylphenylglycidether, p-tert-Butylphenylglycidether, Phenylglycidether, o-Cresylglycidether, Polyoxypropylenglycoldiglycidether, Trimethylolpropantriglycidether (TMP), Glycerintriglycidether, Triglycidylparaaminophenol (TGPAP), Divinylbenzyldioxid und Dicyclopentadiendiepoxid. Sie sind besonders bevorzugt ausgewählt aus der Gruppe bestehend aus 1,4-Butandiolbisglycidylether, 1,6-Hexandiolbisglycidylether (HDDE), 2-Ethylhexylglycidylether, C₈-C₁₀- Alkylglycidylether, C₁₂-C₁₄-Alkylglycidylether, Neopentylglykoldiglycidylether, p-tert-Butylglycidether, Butylglycidether, Nonylphenylglycidether, p-tert-Butylphenylglycidether, Phenylglycidether, o-Cresylglycidether, Trimethylolpropantriglycidether (TMP), Glycerintriglycidether, Divinylbenzyldioxid und Dicyclo-pentadiendiepoxid. Sie sind insbesondere ausgewählt aus der Gruppe bestehend aus 1,4-Butandiolbisglycidylether, C₈-C₁₀- Alkylmonoglycidylether, C₁₂-C₁₄- Alkylmonoglycidylether, 1,6-Hexandiolbisglycidylether (HDDE), Neopentylglykoldiglycidylether, Trimethylolpropantriglyci-dether (TMP), Glycerintriglycidether und Dicyclopentadiendiepoxid.

In einer besonderen Ausführungsform der vorliegenden Erfindung sind die Reaktionsverdünner niedermolekulare organische Verbindungen mit zwei oder mehreren, vorzugsweise mit zwei Epoxidgruppen, bspw. 1,4-Butandiolbisglycidylether, 1,6-Hexandiolbisglycidylether (HDDE), Neopentylglykoldiglycidylether, Polyoxypropylenglycoldiglycidether, Trimethylolpropantriglyci-dether (TMP), Glycerintriglycidether, Triglycidylparaaminophenol (TGPAP), Divinylbenzyldioxid oder Dicyclopentadiendiepoxid, vorzugsweise 1,4-Butandiolbisglycidylether, 1,6-Hexandiolbisglycidylether (HDDE), Neopentylglykoldiglycidylether, Trimethylolpropantriglyci-dether (TMP), Glycerintriglycidether, Divinylbenzyldioxid oder Dicyclopentadiendiepoxid, insbesondere 1,4-Butandiolbisglycidylether, 1,6-Hexandiolbisglycidylether (HDDE), Neopentylglykoldiglycidylether, Trimethylolpropantriglycidether (TMP), Glycerintriglycidether oder Dicyclopenta-diendiepoxid. In einer besonderen Ausführungsform sind die Reaktionsverdünner niedermolekulare aliphatische Verbindungen mit zwei oder mehr. vorzugsweise mit zwei Epoxidgruppen.

In einer besonderen Ausführungsform der vorliegenden Erfindung sind die Reaktionsverdünner niedermolekulare organische Verbindungen mit einer Epoxidgruppe, bspw. Glycidylneodecanoat, Glycidylversatat, 2-Ethylhexylglycidylether, p-tert-Butylglycidether, Butylglycidether, C₈-C₁₀- Alkylglycidylether, C₁₂-C₁₄- Alkylglycidylether, Nonylphenylglycidether, p-tert-Butylphenylglycidether, Phenylglycidether oder o-Cresylglycidether, vorzugsweise 2-Ethylhexylglycidylether, p-tert-Butylglycidether, Butylglycidether, C₈-C₁₀- Alkylglycidylether, C₁₂-C₁₄- Alkylglycidylether, Nonylphenylglycidether, p-tert-Butylphenylglycidether, Phenylglycidether oder o-Cresylglycidether, insbesondere C₈-C₁₀- Alkylglycidylether oder C₁₂-C₁₄- Alkylglycidylether. In einer besonderen Ausführungsform sind die Reaktionsverdünner niedermolekulare aliphatische Verbindungen mit einer Epoxidgruppe.

In einer besonderen Ausführungsform der vorliegenden Erfindung sind die Reaktionsverdünner cyclische Carbonate mit 3 bis 10 C-Atomen, beispielsweise Ethylencarbonat, Propylencarbonat, Butylencarbonat oder Vinylencarbonat, vorzugsweise Ethylencarbonat, Propylencarbonat oder Vinylencarbonat.

Die erfindungsgemäßen Reaktivverdünner machen vorzugsweise einen Anteil bis 30 Gew.-%, besonders bevorzugt bis 25 Gew.-%, insbesondere von 1 bis 20 Gew.-% bezogen auf die Harzkomponente (Epoxidharz und etwaig eingesetzte Reaktivverdünner) der härtbaren Zusammensetzung aus. Die erfindungsgemäßen Reaktivverdünner machen vorzugsweise einen Anteil bis 25 Gew.-%, besonders bevorzugt bis 20 Gew.-%, insbesondere von 1 bis 15 Gew.-% bezogen auf die gesamte härtbare Zusammensetzung aus.

Die erfindungsgemäße härtbare Zusammensetzung kann neben 2,5-BAMF noch weitere aliphatische, cycloaliphatische und aromatisch Polyamine enthalten. Vorzugsweise macht 2,5-BAMF mindestens 50 Gew.-%, besonders bevorzugt mindestens 80 Gew.-%, ganz besonders bevorzugt mindestens 90 Gew.-% bezogen auf die Gesamtmenge der aminischen Härter in der härtbaren Zusammensetzung aus. In einer bevorzugten Ausführungsform enthält die härtbare Zusammensetzung neben 2,5-BAMF keine weiteren aminischen Härter. Unter einem aminischen Härter ist im Rahmen der vorliegenden Erfindung ein Amin mit einer NH-Funktionalität von ≥ 2 zu verstehen (demnach weist bspw. ein primäres Monoamin eine NH-Funktionalität von 2, ein primäres Diamin eine NH-Funktionalität von 4 und ein Amin mit 3 sekundären Aminogruppen eine NH-Funktionalität von 3 auf).

Epoxidharze gemäß dieser Erfindung besitzen üblicherweise 2 bis 10, bevorzugt 2 bis 6, ganz besonders bevorzugt 2 bis 4 und insbesondere 2 Epoxidgruppen. Bei den Epoxidgruppen handelt es sich insbesondere um Glycidylethergruppen, wie sie bei der Umsetzung von Alkoholgruppen mit Epichlorhydrin entstehen. Bei den Epoxidharzen kann es sich um niedermolekulare Verbindungen, welche im Allgemeinen ein mittleres Molgewicht (Mₙ) kleiner 1.000 g/mol haben oder um höhermolekulare Verbindungen (Polymere) handeln. Solche polymeren Epoxidharze haben bevorzugt einen Oligomerisierungsgrad von 2 bis 25, besonders bevorzugt von 2 bis 10 Einheiten. Es kann sich um aliphatische, auch cycloaliphatische Verbindungen oder um Verbindungen mit aromatischen Gruppen handeln. Insbesondere handelt es sich bei den Epoxidharzen um Verbindungen mit zwei aromatischen oder aliphatischen 6-Ringen oder deren Oligomere. Technisch von Bedeutung sind Epoxidharze, die durch Umsetzung des Epichlorhydrins mit Verbindungen, welche mindestens zwei reaktive H-Atome haben, insbesondere mit Polyolen, erhältlich sind. Von besonderer Bedeutung sind Epoxidharze, die durch Umsetzung des Epichlorhydrins mit Verbindungen, welche mindestens zwei, vorzugsweise zwei Hydroxylgruppen und zwei aromatische oder aliphatische 6-Ringe enthalten, erhältlich sind. Als derartige Verbindungen seien insbesondere Bisphenol A und Bisphenol F, sowie hydriertes Bisphenol A und Bisphenol F genannt - die entsprechenden Epoxidharze sind die Diglycidylether von Bisphenol A oder Bisphenol F, oder hydriertem Bisphenol A oder Bisphenol F. Als Epoxidharz gemäß dieser Erfindung wird üblicherweise Bisphenol-A-diglycidylether (DGEBA) verwendet. Geeignete Epoxidharze gemäß dieser Erfindung sind auch Tetraglycidyl-Methylendianilin (TGMDA) und Triglycidylaminophenol oder Gemische davon. In Betracht kommen auch Umsetzungsprodukte des Epichlorhydrins mit anderen Phenolen, z.B. mit Kresolen oder Phenol-Aldehyd-Adukten, wie Phenolformaldehydharzen, insbesondere Novolaken. Geeignet sind auch Epoxidharze, welche sich nicht vom Epichlorhydrin ableiten. In Betracht kommen z.B. Epoxidharze, welche Epoxidgruppen durch Umsetzung mit Glycidyl(meth)acrylat) enthalten. Vorzugsweise werden erfindungsgemäß Epoxidharze oder Gemische davon eingesetzt, die bei Raumtemperatur (25 °C) flüssig sind. Das Epoxid-Äquivalenzgewicht (EEW) gibt die durchschnittlich Masse des Epoxidharzes in g pro Mol Epoxidgruppe an.

Vorzugsweise besteht die erfindungsgemäße härtbare Zusammensetzung zu mindestens 50 Gew.-% aus Epoxidharz.

Vorzugsweise werden bei der erfindungsgemäßen härtbaren Zusammensetzung die Verbindungen der Harzkomponente (Epoxidharze inklusive etwaige Reaktivverdünner mit ihren jeweiligen reaktiven Gruppen) und aminische Härter in einem bezogen auf die reaktiven Gruppen der Verbindungen der Harzkomponente (Epoxidgruppen und bspw. etwaige Carbonatgruppen) bzw. die NH-Funktionalität in etwa stöchiometrischen Verhältnis eingesetzt. Besonders geeignete Verhältnisse von reaktiven Gruppen der Verbindungen der Harzkomponente zu NH-Funktionalität sind beispielsweise 1 : 0,8 bis 1 : 1,2. Reaktive Gruppen der Verbindungen der Harzkomponente sind solche Gruppen, die unter den Härtungsbedingungen mit den Aminogruppen des Aminohärters oder der Aminohärter chemisch reagieren.

Die erfindungsgemäße härtbare Zusammensetzung kann auch weitere Zusätze wie beispielsweise inerte Verdünner, Härtungsbeschleuniger, Verstärkungsfasern (insbesondere Glass- oder Carbonfasern), Pigmente, Farbstoffe, Füllstoffe, Trennmittel, Zähigkeit erhöhende Agenzien (*toughener*), Fließmittel, schaumhemmende Agenzien (*anti*-*foamer*)*,* flammhemmende Agenzien oder Eindickungsmittel. Solche Zusätze werden üblicherweise in funktioneller Menge zugegeben, also bspw. ein Pigment in einer Menge, die zu der gewünschten Farbe für die Zusammensetzung führt. Üblicherweise enthalten die erfindungsgemäßen Zusammensetzungen von 0 bis 50 Gew.-%, bevorzugt 0 bis 20 Gew.-%, bspw. 2 bis 20 Gew.-% für die Gesamtheit aller Additive bezogen auf die gesamte härtbare Zusammensetzung. Unter Additive werden im Rahmen dieser Erfindung alle Zusätze zur härtbaren Zusammensetzung verstanden, die weder Epoxidverbindung noch Reaktivverdünner noch aminischer Härter sind.

Die Molekülstruktur von 2,5-BAMF ist in Formel I wiedergegeben

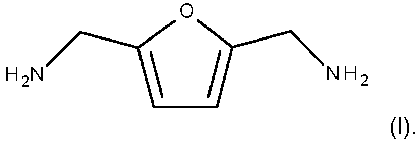

Die vorliegende Erfindung betrifft die Verwendung von 2,5-BAMF als Härter für Harzkomponenten aus ein oder mehreren Epoxidharzen und ein oder mehreren Reaktivverdünnern.

Die vorliegende Erfindung betrifft auch die Verwendung von 2,5-BAMF als Härter für die Herstellung von Epoxidharz-basierten Beschichtungen, insbesondere Bodenbeschichtungen (*floo*ring). Vorzugsweise werden diese Epoxidharz-basierten Beschichtungen unter Zusatz von Reaktivverdünner zu dem Epoxidharz hergestellt.

Die vorliegende Erfindung betrifft auch die Verwendung von 2,5-BAMF als Härter für die Herstellung von Epoxidharz-basierten frühwasserbeständigen Beschichtungen, insbesondere frühwasserbeständigen Bodenbeschichtungen. Vorzugsweise werden diese Epoxidharz-basierten Beschichtungen unter Zusatz von Reaktivverdünner zu dem Epoxidharz hergestellt.

Vorzugsweise weisen die erfindungsgemäß erhaltenen Beschichtungen Frühwasserbeständigkeit bereits nach ≤ 20 h, insbesondere nach ≤ 12 h auf.

2,5-BAMF kann beispielsweise ausgehend von 2,5-Dimethylfuran hergestellt werden (GB911221A, Bsp. 4). 2,5-BAMF kann auch aus Hydroxymethylfurfural hergestellt werden, das wiederum aus nachwachsenden Rohstoffen zugänglich ist (R. van Putten et al., Chemical Reviews (2013) 113 (3), 1499-1597). Damit ist mit 2,5-BAMF vorteilhafterweise ein Härter bereitgestellt, der aus nachwachsenden Rohstoffen gewonnen werden kann.

Ein weiterer Gegenstand der Erfindung ist ein Verfahren zur Herstellung von gehärteten Epoxidharzen aus der erfindungsgemäßen härtbaren Zusammensetzung. Bei dem erfindungsgemäßen Verfahren zur Herstellung solcher gehärteter Epoxidharze wird die erfindungsgemäße härtbare Zusammensetzung bereitgestellt und anschließend gehärtet. Dazu werden die Komponenten (Epoxidharz-Komponente (aus Epoxidharz und Reaktivverdünner) und HärterKomponente (umfassend 2,5-BAMF) und gegebenenfalls weitere Komponenten wie beispielsweise Additive) miteinander in Kontakt gebracht, vermischt und danach bei einer für die Anwendung praktikablen Temperatur gehärtet. Bevorzugt erfolgt die Härtung bei einer Temperatur von mindestens 0 °C, besonders bevorzugt von mindestens 10 °C.

Ein besonderer Gegenstand der Erfindung ist ein Verfahren zur Herstellung von Formkörpern, dadurch gekennzeichnet, dass die erfindungsgemäße härtbare Zusammensetzung bereitgestellt, in eine Form gefüllt und anschließend gehärtet wird. Dazu werden die Komponenten (Epoxidharz-Komponente (aus Epoxidharz und Reaktivverdünner) und Härter-Komponente (umfassend 2,5-BAMF) und gegebenenfalls weitere Komponenten wie beispielsweise Additive) miteinander in Kontakt gebracht, vermischt, in eine Form gefüllt und danach bei einer für die Anwendung praktikablen Temperatur gehärtet. Bevorzugt erfolgt die Härtung bei einer Temperatur von mindestens 0 °C, besonders bevorzugt von mindestens 10 °C.

Ein besonderer Gegenstand der Erfindung ist ein Verfahren zur Herstellung von Beschichtungen, dadurch gekennzeichnet, dass die erfindungsgemäße härtbare Zusammensetzung bereitgestellt, auf eine Oberfläche aufgetragen und anschließend gehärtet wird. Dazu werden die Komponenten (Epoxidharz-Komponente (aus Epoxidharz und Reaktivverdünner) und Härter-Komponente (umfassend 2,5-BAMF) und gegebenenfalls weitere Komponenten wie beispielsweise Additive) miteinander in Kontakt gebracht, vermischt, auf eine Oberfläche aufgetragen und danach bei einer für die Anwendung praktikablen Temperatur gehärtet. Bevorzugt erfolgt die Härtung bei einer Temperatur von mindestens 0 °C, besonders bevorzugt von mindestens 10°C.

Vorzugsweise wird das gehärtete Epoxidharz noch einer thermischen Nachbehandlung ausgesetzt, beispielsweise im Rahmen der Härtung oder im Rahmen einer optionalen nachgeschalteten Temperung.

Die Härtung kann bei Normaldruck und bei Temperaturen kleiner 250 °C, insbesondere bei Temperaturen kleiner 210 °C, vorzugsweise bei Temperaturen kleiner 185 °C erfolgen, insbesondere in einem Temperaturbereich von 0 bis 210 °C, ganz besonders bevorzugt in einem Temperaturbereich von 10 bis 185 °C.

Die Härtung erfolgt bspw. in einem Werkzeug bis Formstabilität erreicht ist und das Werkstück aus dem Werkzeug entnommen werden kann. Der sich anschließende Prozess zum Abbau von Eigenspannungen des Werkstücks und/oder zum Vervollständigen der Vernetzung des gehärteten Epoxidharzes wird Tempern genannt. Grundsätzlich ist es auch möglich, den Temperprozess auch vor Entnahme des Werkstückes aus dem Werkzeug durchzuführen, etwa zur Vervollständigung der Vernetzung. Der Temperprozess findet üblicherweise bei Temperaturen an der Grenze der Formsteifigkeit statt. Üblicherweise wird bei Temperaturen von 60 bis 220 °C, bevorzugt bei Temperaturen von 80 bis 220 °C getempert. Üblicherweise wird das gehärtete Werkstück für einen Zeitraum von 30 bis 600 min den Temperbedingungen ausgesetzt. Abhängig von den Abmessungen des Werkstücks, können auch längerer Temperzeiten angebracht sein.

Weiterer Gegenstand der Erfindung ist das gehärtete Epoxidharz aus der erfindungsgemäßen härtbaren Zusammensetzung. Insbesondere ist gehärtetes Epoxidharz, das erhältlich ist, bzw. erhalten wird durch Härtung einer erfindungsgemäßen härtbaren Zusammensetzung, ein Gegenstand der Erfindung. Insbesondere ist gehärtetes Epoxidharz, das erhältlich ist, bzw. erhalten wird durch das erfindungsgemäße Verfahren zur Herstellung von gehärteten Epoxidharzen, ein Gegenstand der Erfindung.

Die erfindungsgemäß gehärteten Epoxidharze weisen eine vergleichsweise hohe Tg auf.

Die erfindungsgemäßen härtbaren Zusammensetzungen eignen sich als Beschichtungs- oder Imprägnierungsmittel, als Klebstoff, zur Herstellung von Formkörpern und Verbundmaterialien, oder als Gießmassen zur Einbettung, Anbindung oder Verfestigung von Formkörpern. Als Beschichtungsmittel seien z.B. Lacke genannt. Insbesondere können mit den erfindungsgemäßen härtbaren Zusammensetzungen kratzfeste Schutzlacke auf beliebigen Substraten, z.B. aus Metall, Kunststoff oder Holzwerkstoffen erhalten werden. Die härtbaren Zusammensetzungen eignen sich auch als Isolierbeschichtungen in elektronischen Anwendungen, z.B. als Isolierbeschichtung für Drähte und Kabel. Genannt sei auch die Verwendung zur Herstellung von Photoresisten. Sie eignen sich auch als Reparaturlack, z.B. auch bei der Ausbesserung von Rohren ohne Demontage der Rohre (*cure in place pipe* (CIPP) *rehabilitation*). Sie eignen sich insbesondere zur Beschichtung bzw. Versiegelung von Fußböden. In Verbundmaterialien (Komposite) sind unterschiedliche Materialien, z.B. Kunststoffe und Verstärkungsmaterialien (bspw. Glasfasern oder Carbonfasern) miteinander verbunden.

Als Herstellverfahren für Verbundmaterialien seien die Härtung von vorimprägnierten Fasern oder Fasergeweben (z.B. *Prepregs*) nach Lagerung oder aber die Extrusion, Strangziehen (*pultrusion*), Wickeln (*winding*) und Infusions- bzw. Injektionsverfahren wie Vakuuminfusion (VARTM), Spritzpressen (*resin transfer molding,* RTM) sowie Nasspressverfahren wie BMC (*bulk mold compression*) genannt.

Die härtbare Zusammensetzung ist geeignet zur Herstellung von Formkörpern, insbesondere von solchen mit Verstärkungsfasern (bspw. Glas- oder Carbonfasern).

Weitere Gegenstände der Erfindung betreffen Formkörper aus dem erfindungsgemäßen gehärteten Epoxidharz, Beschichtung (insbesondere frühwasserbeständige Bodenbeschichtungen) aus dem gehärteten Epoxidharz, Verbundmaterialien, die das erfindungsgemäße gehärtete Epoxidharz enthalten, sowie Fasern, die mit der erfindungsgemäßen härtbaren Zusammensetzung imprägniert sind. Die erfindungsgemäßen Verbundmaterialien enthalten neben dem erfindungsgemäßen gehärteten Epoxidharz vorzugsweise Glas- und/oder Carbonfasern.

Weitere Gegenstände der Erfindung betreffen Beschichtungen, die erhältlich sind bzw. erhalten werden durch Beschichten einer Oberfläche mit einer härtbaren Zusammensetzung, die als Komponenten 2,5-BAMF und ein oder mehrere Epoxidharze umfasst und anschließender Härtung dieser Zusammensetzung. Die so erhältliche bzw. erhaltene Beschichtung ist bspw. eine Bodenbeschichtung. Die so erhältliche bzw. erhaltene Beschichtung weist eine gute Frühwasserbeständigkeit auf. Vorzugsweise ist die Frühwasserbeständigkeit dieser Beschichtung bereits nach ≤20 h, insbesondere nach ≤12 h nach Vermischung der Komponenten erreicht. Die so erhältliche bzw. erhaltene Beschichtung weist eine schnelle Ausbildung der Shore-D-Härte auf. Vorzugsweise ist eine Shore-D-Härte von >45% bereits nach ≤24 h erreicht.

Die Glasübergangstemperatur (Tg) kann mittels Dynamisch-Mechanischer Analyse (DMA), beispielsweise gemäß der Norm DIN EN ISO 6721, oder mit einem Differential Kalorimeter (DSC), beispielsweise gemäß der Norm DIN 53765, bestimmt werden. Bei der DMA wird ein rechteckiger Probekörper mit einer erzwungenen Frequenz und vorgegebener Deformation auf Torsion belastet. Dabei wird die Temperatur mit einer definierten Rampe gesteigert und Speicher- und Verlustmodul in festen Zeitintervallen aufgezeichnet. Ersterer stellt die Steifigkeit eines viskoelastischen Werkstoffs dar. Letzterer ist proportional zur im Material dissipierten Arbeit. Die Phasenverschiebung zwischen der dynamischen Spannung und der dynamischen Verformung wird durch den Phasenwinkel δ gekennzeichnet. Die Glasübergangstemperatur kann durch unterschiedliche Methoden bestimmt werden: Als Maximum der tan δ Kurve, als Maximum des Verlustmoduls oder mittels Tangentenmethode am Speichermodul. Bei Bestimmung der Glasübergangstemperatur unter Verwendung eines Differential Kalorimeters wird eine sehr kleine Probenmenge (ca. 10 mg) in einem Aluminiumtiegel erwärmt und der Wärmestrom zu einem Referenztiegel gemessen. Dieser Zyklus wird dreimal wiederholt. Die Bestimmung des Glasübergangs erfolgt als Mittelwert aus der zweiten und dritten Messung. Die Auswertung der Tg-Stufe der Wärmestromkurve kann über den Wendepunkt, nach der halben Breite oder dem Verfahren der Mittelpunktstemperatur bestimmt werden.

Die Gelierzeit gibt nach DIN 16 945 einen Anhaltspunkt über die Zeitspanne zwischen der Zugabe des Härters zum Reaktionsgemisch und des Übergangs der Reaktionsharzmasse vom flüssigen in den Gelzustand. Die Temperatur spielt dabei eine wichtige Rolle, weshalb die Gelierzeit jeweils für eine vorbestimmte Temperatur ermittelt wird. Mit Hilfe dynamisch-mechanischer Methoden, insbesondere der Rotationsviskosimetrie, können auch kleine Probenmengen quasi-isotherm untersucht und ihr gesamter Viskositäts- bzw. Steifigkeitsverlauf erfasst werden. Nach der Norm ASTM D 4473 ist der Schnittpunkt zwischen dem Speichermodul G' und dem Verlustmodul G", an dem die Dämpfung tan-δ den Wert 1 hat, der Gelpunkt, und die Zeitspanne ab Zugabe des Härters zum Reaktionsgemisch bis zum Erreichen des Gelpunkts ist die Gelierzeit. Die so bestimmte Gelierzeit kann als Maß für die Aushärtungsgeschwindigkeit angesehen werden.

Frühwasserbeständigkeit ist die Eigenschaft einer Beschichtung, schon nach kurzer Zeit nach dem Auftragen mit Wasser in Kontakt kommen zu können, ohne dass die Beschichtung Schaden nimmt. Bei Beschichtungen auf Basis von Epoxidharzen und aminischen Härtern handelt es sich dabei insbesondere um Carbamatbildung, die an der Ausbildung von weißen Schlieren oder Krusten auf der Oberfläche der frischen Beschichtung zu erkennen ist.

Die Shore-Härte ist eine Kennzahl für Polymere wie bspw. gehärtete Epoxidharze, die in direkter Beziehung zur Eindringtiefe eines Eindringkörper (Indenter) in den Prüfkörper steht, und ist somit ein Maß für die Härte des Prüfkörpers. Sie wird bspw. entsprechend der Norm DIN ISO 7619-1 bestimmt. Man unterscheidet zwischen den Verfahren Shore A, C und D. Als Indenter wird ein federbelasteter Stift aus gehärtetem Stahl verwendet. Dabei wird der Indenter mit Federkraft in den Prüfkörper gedrückt und die Eindringtiefe stellt ein Maß für die Shore-Härte dar. Während für die Bestimmung der Shore-Härte A und C wird als Indenter ein Kegelstumpf mit einer Stirnfläche von 0,79 mm im Durchmesser und einem Öffnungswinkel von 35° verwendet wird, benutzt man bei der Shore-Härte D-Prüfung als Indenter ein Kegelstumpf mit einer kugelförmigen Spitze mit einem Radius von 0,1 mm und einem Öffnungswinkel von 30°. Für die Ermittlung der Shore-Härtekennwerte wurde eine Skala eingeführt, die von 0 Shore (2,5 mm Eindringtiefe) bis 100 Shore (0 mm Eindringtiefe) reicht. Dabei entspricht der Skalenwert 0 dem maximal möglichen Eindruck, d.h. der Werkstoff setzt dem Eindringen des Indenters keinen Widerstand entgegen. Dagegen entspricht der Skalenwert 100 einem sehr hohen Widerstand des Werkstoffs gegenüber dem Eindringen und es wird praktisch kein Eindruck erzeugt. Bei der Bestimmung der Shore-Härte spielt die Temperatur eine entscheidende Rolle, so dass die Messungen in einem eingeschränkten Temperaturintervall von 23°C ± 2 °C normgerecht durchgeführt werden müssen.. Bei Bodenbeschichtungen wird üblicherweise davon ausgegangen, dass ab einer Shore-D-Härte von 45 der Boden wieder begehbar ist.

2,5-BAMF ist eine überlegene Alternative zu herkömmlichen aminischen Härtern wie MXDA, die dabei gut zugänglich ist aus nachwachsenden Rohstoffen. Insbesondere bei dem Einsatz als Härter für Harzkomponenten aus Epoxidharz und Reaktivverdünner ergeben sich günstige Anfangsviskositäten für die härtbare Zusammensetzung, ohne dass es zu einer nachteiligen Verzögerung bei der Aushärtung kommt.

Vorteilhafterweise führt der Einsatz von 2,5-BAMF als Härter für Epoxidharze auch zu einer guten Frühwasserbeständigkeit für die entsprechenden aushärtenden Epoxidharze. Zudem wird mit 2,5-BAMF als Härter für Epoxidharze auch binnen vergleichsweise kurzer Zeit eine Härte (Shore-D-Härte) erreicht, bei der das aushärtende Epoxidharz bereits einer ersten Belastung ausgesetzt werden kann. Damit ist der Härter in besonderer Weise geeignet für die Herstellung von Bodenbeschichtungen.

Die Erfindung wird nun durch die nachfolgenden, nichtlimitierenden Beispiele näher erläutert.

### Beispiel 1

### Herstellung der härtbaren Zusammensetzung (Reaktionsharzmasse) und Untersuchung des Reaktivitätsprofils

Verschiedene Epoxidharz-Komponenten (A bis C) wurden durch Vermischen von Epoxidharz (Bisphenol-A Diglycidylether, Epilox A19-03, Leuna Harze, EEW 182) mit Reaktivverdünner (Hexandiolbisglycidylether (Epilox P13-20, Leuna Harze), C₁₂-C₁₄- Alkylglycidylether (Epilox P13-18, Leuna Harze) bzw. Propylencarbonat (Huntsman) entsprechend der Tabelle 1 hergestellt. Die Epoxidharz-Komponente D ohne Zusatz von Reaktivverdünner diente als Vergleich.

**Tabelle 1: Zusammensetzungen der Epoxidharz-Komponenten**

| Nr. | Epoxidharz | Reaktivverdünner | EEW |
|---|---|---|---|
| A | Epilox A19-03 (90 Teile) | Hexandiolbisglycidylether (10 Teile) | 179 |
| B | Epilox A19-03 (90 Teile) | C₁₂-C₁₄- Alkylglycidylether (10 Teile) | 189 |
| C | Epilox A19-03 (90 Teile) | Propylencarbonat (10 Teile) | 145 |
| D | Epilox A19-03 (100 Teile) | --- | 182 |

Die miteinander zu vergleichenden Formulierungen wurden durch Mischen stöchiometrischer Mengen des aminischen Härters 2,5-BAMF mit den verschiedenen Epoxidharz-Komponenten hergestellt und sofort untersucht. Zum Vergleich wurden entsprechende Versuche mit dem dem 2,5-BAMF strukturell ähnlichen MXDA als aminischen Härter durchgeführt.

Die rheologischen Messungen zur Untersuchung des Reaktivitätsprofils der cycloaliphatischen Amine mit Epoxidharzen wurden an einem schubspannungsgesteuerten Platte-Platte Rheometer (MCR 301, Anton Paar) mit einem Plattendurchmesser von 15 mm und einem Spaltabstand von 0,25 mm bei unterschiedlichen Temperaturen durchgeführt.

Untersuchung 1a) Vergleich der benötigten Zeit der frisch hergestellten Reaktionsharzmasse um eine Viskosität von 10.000 mPa*s bei einer definierten Temperatur zu erreichen. Die Messung wurde rotierend an dem oben genannten Rheometer bei verschiedenen Temperaturen (0 °C, 10 °C, 23 °C und 75 °C) durchgeführt. Gleichzeitig wurde die Anfangsviskosität (gemittelt über den Zeitraum von 2 bis 5 min nach dem Vermischen der Komponenten) für die jeweiligen Mischungen bei den jeweiligen Temperaturen bestimmt. Die Ergebnisse sind in Tabelle 2 zusammengefasst.

**Tabelle 2: Anfangsviskosität (AV in mPa*s) und Zeitdauer (t in min) für isothermen Viskositätsanstieg auf 10.000 mPa*s**

| Zusammensetzung (Epoxidharz-Komponente und Härter) | 10 °C | | 23 °C | | 75 °C | |
|---|---|---|---|---|---|---|
| | AV | t | AV | t | AV | t |
| A und 2,5-BAMF | 334 | 416 | 627 | 178 | 30 | 12 |
| B und 2,5-BAMF | 227 | 611 | 57 | 305 | 24 | 15 |
| C und 2,5-BAMF | 140 | 315 | 49 | 196 | 23 | 12 |
| D und 2,5-BAMF | 863 | 319 | 196 | 185 | 55 | 12 |
| A und MXDA | 2518 | 167 | 557 | 179 | 30 | 13 |
| B und MXDA | 1565 | 232 | 451 | 221 | 25 | 16 |
| C und MXDA | 159 | 291 | 371 | 125 | 23 | 12 |
| D und MXDA | 950 | 305 | 181 | 210 | 71 | 13 |

Untersuchung 1b) Vergleich der Gelierzeiten. Die Messung wurde oszillierend an dem oben genannten Rheometer bei 0 °C, 10 °C, 23 °C und 75 °C durchgeführt. Der Schnittpunkt von Verlustmodul (G") und Speichermodul (G') liefert die Gelierzeit. Die Ergebnisse sind in Tabelle 3 zusammengestellt.

**Tabelle 3: Isotherme Gelierzeiten (in min)**

| Zusammensetzung (Epoxidharz-Komponente und Härter) | 0 °C | 10 °C | 23 °C | 75 °C |
|---|---|---|---|---|
| A und 2,5-BAMF | 2230 | 1100 | 430 | 16 |
| B und 2,5-BAMF | 3127 | 1249 | 496 | 18,5 |
| C und 2,5-BAMF | 2113 | 876 | 353 | 15 |
| D und 2,5-BAMF | 1755 | 968 | 334 | 16 |
| A und MXDA | 2668 | 1165 | 462 | 18 |
| B und MXDA | 2996 | 1446 | 565 | 21 |
| C und MXDA | 1685 | 782 | 355 | 17,5 |
| D und MXDA | 1713 | 1011 | 383 | 18 |

in den meisten Fällen wird der Gelpunkt bei den 2,5-BAMF gehärteten Zusammensetzungen früher erreicht als bei den entsprechenden MXDA gehärteten Zusammensetzungen, obwohl 2,5-BAMF gehärtete Zusammensetzungen über eine längere Zeit eine Viskosität von unter 10.000 mPa*s aufweisen und damit über einen vergleichsweise langen Zeitraum gut verarbeitbar sind. Demnach zeichnen sich die auf 2,5-BAMF basierenden härtbaren Zusammensetzungen dadurch aus, dass sie eine vergleichsweise günstige Anfangsviskosität aufweisen, vergleichsweise lange Zeit geringviskos (<10.000 mPa*s) bleiben, dann aber binnen vergleichsweise kurzer Zeit den Gelpunkt erreichen.

### Beispiel 2

Exothermes Profil der härtbaren Zusammensetzung (Reaktionsharzmasse) und Glasübergangstemperaturen der gehärteten Epoxidharze (ausgehärteten Duroplaste)

Die DSC-Untersuchungen der Härtungsreaktion von 2,5-BAMF bzw. MXDA mit den Epoxidharz-Komponenten A bis D zur Bestimmung von Onset-Temperatur (To), Maximaltemperatur (Tmax), exothermer Energie (ΔH) und Glasübergangstemperaturen (Tg) wurden nach ASTM D 3418 durchgeführt, wobei das folgende Temperaturprofil verwendet wurde: 0 °C → 5K/min 180 °C → 30min 180 °C → 20K/min 0 °C → 20K/min 220 °C. Es wurden jeweils 2 Läufe durchgeführt, wobei die Tg jeweils beim 2ten Lauf bestimmt wurden. Die Ergebnisse sind in Tabelle 4 zusammengestellt.

**Tabelle 4: Exothermes Profil und Glasübergangstemperaturen**

| Zusammensetzung (Epoxidharz-Komponente und Härter) | To (°C) | ΔH (J/g) | Tg (°C) |
|---|---|---|---|
| A und 2,5-BAMF | 75,9 | 606 | 101 |
| B und 2,5-BAMF | 80,0 | 586 | 90 |
| C und 2,5-BAMF | 72,5 | 560 | 80 |
| D und 2,5-BAMF | 78,0 | 609 | 117 |
| A und MXDA | 75,0 | 629 | 108 |
| B und MXDA | 79,2 | 594 | 97 |
| C und MXDA | 71,7 | 554 | 84 |
| D und MXDA | 75 | 551 | 124 |

Die mit BAMF erreichten Glasübergangstemperaturen sind vergleichbar mit denen, die mit MXDA erreicht werden, gleiches gilt für die verschiedenen RV bedingten Erniedrigungen der Glasübergangstemperaturen.

### Beispiel 3

### Frühwasserbeständigkeit und Entwicklung der Shore-D-Härte

Zur Untersuchung der der Frühwasserbeständigkeit der Duroplaste aus Härter-Komponente (2,5-BAMF bzw. MXDA) und Epoxidharz-Komponenten (A bis D) wurden die beiden Komponenten in stöchiometrischem Verhältnis im Speedmixer gemischt (1 min bei 2000 rpm), in mehrere Schalen gegossen und bei 23 °C im Klimaschrank (60% relative Luftfeuchtigkeit) gelagert. In regelmäßigen Zeitabständen wurde jeweils eine Schale entnommen und die Oberfläche des Epoxidharzes mit 2 ml destilliertem Wasser versetzt. Bestimmt wurde die Zeit, nach der das Epoxidharz bei Wasserkontakt keine Carbamatbildung mehr zeigt und somit Frühwasserbeständigkeit erreicht ist. Die Carbamatbildung ist erkennbar anhand von Ausbildung von Krusten oder weißem Schleier auf der Oberfläche des Epoxidharzes.

Zur Untersuchung der Entwicklung der Shore-D-Härte wurde die Härter-Komponente (2,5-BAMF bzw. MXDA) jeweils mit der Epoxidharz-Komponente D in stöchiometrischem Verhältnis im Speedmixer gemischt (1 min bei 2000 rpm) und in mehrere Schalen gegossen. Anschließend wurden die Schalen im Klimaschrank (60% relative Luftfeuchtigkeit) bei 10 °C gelagert und die Shore-D-Härte in regelmäßigen Abständen an den Probenkörpern (Dicke 6 mm) bei 23 °C mittels Durometer (TI Shore Prüfstand, Sauter Messtechnik) bestimmt. Die Zeit bis zum Erreichen einer Shore-D-Härte von >45 und die Shore-D-Härte nach einer Lagerzeit von 48 h ist in Tabelle 5 zusammengestellt. Für alle untersuchten Zusammensetzungen wurde beobachtet, dass binnen von 48 h Lagerung unter den oben genannten Bedingungen ein Plateauwert für die Shore-D-Härte erreicht wurde. Diese Shore-D-Härte entspricht also der maximal erreichbaren Shore-D-Härte für die jeweilige Zusammensetzung.

**Tabelle 5: Frühwasserbeständigkeit und Shore-D-Härte**

| Zusammensetzung (Epoxidharz-Komponente und Härter) | t_{F} bei 23 °C (in h) | t_{SD45} bei 10 °C (in h) | SD nach 48 h bei 10 °C |
|---|---|---|---|
| A und 2,5-BAMF | 6 | | 87 |
| B und 2,5-BAMF | 8 | | 87 |
| C und 2,5-BAMF | 8 | | 87 |
| D und 2,5-BAMF | 8 | 19 | 92 |
| A und MXDA | 24 | | 88 |
| B und MXDA | 24 | | 89 |
| C und MXDA | 24 | | 92 |
| D und MXDA | >240 | 28 | 91 |

| | | | |
|---|---|---|---|
| t_{F}: Zeitspanne bis zum Erreichen der Frühwasserbeständigkeit; t_{SD45}: Zeitspanne bis zum Erreichen einer Shore-D-Härte von >45; SD: Shore-D-Härte | | | |

BAMF eignet sich in hervorragender Weise als Härter für Epoxidharz-basierte Bodenbeschichtungen, da es sowohl Frühwasserbeständigkeit wie auch eine für die Begehbarkeit ausreichende Härte in vergleichsweise kurzer Zeit nach der Beschichtung des Bodens bewirkt.

## Patentansprüche

1. Eine härtbare Zusammensetzung, **dadurch gekennzeichnet, dass** sie eine Harzkomponente und eine Härterkomponente umfasst, wobei die Harzkomponente ein oder mehrere Epoxidharze und ein oder mehrere Reaktivverdünner umfasst und die Härterkomponente 2,5-Bisaminomethylfuran umfasst.

2. Die härtbare Zusammensetzung gemäß Anspruch 1, **dadurch gekennzeichnet, dass** der Reaktivverdünner eine niedermolekulare organische Verbindungen mit ein oder mehreren Epoxidgruppen oder ein cyclisches Carbonat mit 3 bis 10 C-Atomen ist.

3. Die härtbare Zusammensetzung gemäß Anspruch 2, **dadurch gekennzeichnet, dass** der Reaktivverdünner ausgewählt ist aus der Gruppe bestehend aus Ethylencarbonat, Vinylencarbonat, Propylencarbonat, 1,4-Butandiolbisglycidylether, 1,6-Hexandiolbisglycidylether, Glycidylneodecanoat, Glycidylversatat, 2-Ethylhexylglycidylether, Neopentylglykoldiglycidylether, p-tert-Butylglycidether, Butylglycidether, C₈-C₁₀- Alkylglycidylether, C₁₂-C₁₄- Alkylglycidylether, Nonylphenylglycidether, p-tert-Butylphenylglycidether, Phenylglycidether, o-Cresylglycidether, Polyoxypropylenglycoldiglycidether, Trimethylolpropantriglycidether, Glycerintriglycidether, Triglycidylpa-raaminophenol, Divinylbenzyldioxid und Dicyclopentadiendiepoxid.

4. Die härtbare Zusammensetzung gemäß einem der Ansprüch 1 bis 3, **dadurch gekennzeichnet, dass** die ein oder mehreren Epoxidharze ausgewählt sind aus der Gruppe bestehend aus Diglycidylether von Bisphenol A, Diglycidylether von Bisphenol F, Digly-cidylether von hydriertem Bisphenol A und Diglycidylether von hydriertem Bisphenol F.

5. Verwendung von 2,5-Bisaminomethylfuran als Härter in einer härtbaren Zusammensetzung umfassend eine Harzkomponente aus Epoxidharz und Reaktivverdünner.

6. Verfahren zur Herstellung von gehärteten Epoxidharzen, **dadurch gekennzeichnet, dass** eine härtbare Zusammensetzung nach einem der Ansprüche 1 bis 4 bereitgestellt und anschließend gehärtet wird.

7. Verfahren zur Herstellung von Formkörpern, **dadurch gekennzeichnet, dass** eine härtbare Zusammensetzung nach einem der Ansprüche 1 bis 4 bereitgestellt, in eine Form gefüllt und anschließend gehärtet wird.

8. Verfahren zur Herstellung von Beschichtungen, **dadurch gekennzeichnet, dass** eine härtbare Zusammensetzung nach einem der Ansprüche 1 bis 4 bereitgestellt, auf eine Oberfläche aufgetragen und anschließend gehärtet wird.

9. Ein gehärtetes Epoxidharz, **dadurch gekennzeichnet, dass** es erhältlich ist durch das Verfahren nach Anspruch 6.

10. Ein gehärtetes Epoxidharz, **dadurch gekennzeichnet, dass** es erhältlich ist durch Härtung einer härtbaren Zusammensetzung nach einem der Ansprüche 1 bis 4.

11. Ein Formkörper, **dadurch gekennzeichnet, dass** er aus einem gehärteten Epoxidharz gemäß Anspruch 9 oder 10 besteht.

12. Eine Beschichtung, **dadurch gekennzeichnet, dass** er aus einem gehärteten Epoxidharz gemäß Anspruch 9 oder 10 besteht.

13. Verwendung von 2,5-Bisaminomethylfuran als Härter für die Herstellung von Epoxidharz-basierten Beschichtungen.

14. Eine Beschichtung, **dadurch gekennzeichnet, dass** sie erhältlich ist durch Beschichten einer Oberfläche mit einer härtbaren Zusammensetzung, die als Komponenten 2,5-Bisaminomethylfuran und ein oder mehrere Epoxidharze umfasst und anschließender Härtung dieser Zusammensetzung.
